# EUROPÄISCHE PATENTANMELDUNG

(11) **EP 2 708 719 A1**
(43) Veröffentlichungstag der Anmeldung: **19.03.2014**
(21) Anmeldenummer: 12184832.9
(22) Anmeldetag: 18.09.2012
(51) Int. Cl.: F02C 6/14, F02C 6/18, F01K 23/10

(54) **Erweitertes Gaskraftwerk zur Stromspeicherung**

(71) Anmelder: Siemens Aktiengesellschaft, 80333 München (DE)
(72) Erfinder: Vortmeyer, Nicolas, 91054 Erlangen (DE); Brunhuber, Christian, 91275 Auerbach (DE); Knobloch, Katja, 91083 Baiersdorf/Hagenau (DE); Menapace, Wolfgang, 91052 Erlangen (DE); Strobelt, Frank, 90419 Nürnberg (DE); Zimmermann, Gerhard, 91315 Höchstadt/Aisch (DE)

(57) **Zusammenfassung**

Die Erfindung betrifft ein Verfahren zum Betrieb eines Gaskraftwerks (1), sowie ein solches Gaskraftwerk (1), umfassend eine Gasturbine (10), die mit einem auch als Motor betreibbaren Generator (14) verbunden ist und die mit einem Wasserdampfkreislauf (20) thermisch über einen ersten Wärmetauscher (25) gekoppelt ist, welches Verfahren folgende Schritte umfasst:
- Betreiben des Generators (14) als Motor derart, dass aus der Gasturbine (10) ein erwärmter Gasstrom (16) austritt;
- thermisches Konditionieren von Wasser in dem Wasserdampfkreislauf (20) über den ersten Wärmetauscher (25) mittels des erwärmten Gasstroms (16);
- Bevorraten des so thermisch konditionierten Wassers in einem Dampfspeicher (40);
- Betreiben einer Dampfturbine (50) mit Wasserdampf, welcher aus dem Dampfspeicher (40) entnommen wird;
- Ableiten des Wasserdampfs nach Wechselwirkung mit der Dampfturbine (50) in einen Dampfraum (60) zur Kondensation;
- Sammeln des kondensierten Wassers in einem Kondensatspeicher (70);

## Beschreibung

Die vorliegende Erfindung betrifft ein Verfahren zum Betrieb eines Gaskraftwerks umfassend eine Gasturbine, die mit einem auch als Motor betreibbaren Generator verbunden und mit einem Wasserdampfkreislauf thermisch über einen ersten Wärmetauscher gekoppelt ist. Ebenso betrifft die vorliegende Erfindung ein solches Gaskraftwerk.

Aufgrund des raschen Ausbaus von erneuerbaren Energiequellen, die typischerweise zeitlich stark fluktuierende elektrische Leistungen in das öffentliche Versorgungsnetzwerk einspeisen, ergeben sich zahlreiche Herausforderungen hinsichtlich der Netzstabilität sowie der zur Gewährung dieser Netzstabilität notwendigen Maßnahmen.

Bisher sind herkömmliche, fossil befeuerte Kraftwerke noch in der Lage, ausreichend Netzreserve für die erneuerbaren Energiequellen zu liefern, damit Netzinstabilitäten vermieden werden können. Jedoch zeichnet es sich bereits ab, dass etliche dieser Kraftwerke in Zukunft diese Netzdienstleistungen nicht mehr zu erbringen in der Lage sind, da sie unter zunehmend sinkender Auslastung betrieben werden müssen. Folglich ist es erforderlich, weitere technische Maßnahmen vorzunehmen, die die Erhaltung der Netzstabilität ermöglichen können. Solche technische Maßnahmen können in einer geeigneten Nachrüstung zur Verbesserung der Flexibilisierung der erneuerbaren Energiequellen liegen, wie auch in einem verbesserten Netzausbau oder in der Errichtung von so genannten "Phasenschiebern" (Synchrongeneratoren).

Weitere technische Maßnahmen, die zu einer Netzstabilisierung beitragen können, sind auch bspw. die Einbindung von Energiespeichern in das öffentliche Versorgungsnetzwerk, die eine zeitliche Zwischenspeicherung von elektrischer Leistung ermöglichen können. Die Zwischenspeicherung kann hierbei in physikalisch bzw. chemisch geeigneter Form erfolgen. Zwischenspeicher sind zur Netzstabilisierung auch deswegen besonders geeignet, da sie in der Lage sind, elektrischen Überschussstrom aus dem öffentlichen Versorgungsnetzwerk zu entnehmen, um diesen zu einem späteren Zeitpunkt dem Netzwerk wieder zur Verfügung stellen zu können.

Nachteilig an einer solchen Zwischenspeicherung ist jedoch, dass bei jedem Speichervorgang bzw. bei den damit in Zusammenhang stehenden energetischen Umwandlungsprozessen ein systembedingter Leistungsverlust erfolgt. Die dabei auftretenden Verlustleistungen können hierbei größer sein, als die zu einem späteren Zeitpunkt in das öffentliche Versorgungsnetzwerk wieder eingespeisten Leistungen. Folglich leiden viele der bisher bekannten und diskutierten Lösungen zur Zwischenspeicherung von elektrischem Überschussstrom an einer nicht ausreichend wirtschaftlichen Speicher- und Leistungsbilanz.

Der vorliegenden Erfindung liegt nun die Aufgabe zugrunde, diese aus dem Stand der Technik bekannten Nachteile zu vermeiden, und eine Zwischenspeicherung von elektrischem Strom aus den öffentlichen Versorgungsnetzwerken vorzuschlagen, die sowohl hinsichtlich der Leistungsbilanz wirtschaftlich als auch in Bezug auf die technische Realisierung ohne großen Kostenaufwand möglich ist. Ferner soll die vorliegende Erfindung eine Zwischenspeicherung von aus den öffentlichen Versorgungsnetzwerken entnommener elektrischer Leistung ermöglichen, die auf Grundlage bereits installierter Kraftwerke ohne kostenaufwendige Änderungen realisierbar ist. Zudem ist es Aufgabe der Erfindung, bereits bestehende Kraftwerksanlagen derart zu modifizieren, dass sie in Bezug auf ihre Flexibilisierung verbessert werden.

Diese der Erfindung zugrunde liegenden Aufgaben werden durch ein Verfahren gemäß Anspruch 1 sowie durch ein Gaskraftwerk gemäß Anspruch 11 gelöst.

Insbesondere werden diese Aufgaben durch ein Verfahren zum Betrieb eines Gaskraftwerks gelöst, welches eine Gasturbine umfasst, die mit einem auch als Motor betreibbaren Generator verbunden ist, und die mit einem Wasserdampfkreislauf thermisch über einen ersten Wärmetauscher gekoppelt ist, welches Verfahren folgende Schritte umfasst:
- Betreiben des Generators als Motor derart, dass aus der Gasturbine ein erwärmter Gasstrom austritt;
- thermisches Konditionieren von Wasser in dem Wasserdampfkreislauf über den ersten Wärmetauscher mittels des erwärmten Gasstroms;
- Bevorraten des so thermisch konditionierten Wassers in einem Dampfspeicher;
- Betreiben einer Dampfturbine mit Wasserdampf, welcher aus dem Dampfspeicher entnommen wird;
- Ableiten des Wasserdampfs nach Wechselwirkung mit der Dampfturbine in einem Dampfraum zur Kondensation;
- Sammeln des kondensierten Wassers in einem Kondensatspeicher.

Ebenso werden die der Erfindung zugrundeliegenden Aufgaben durch ein Gaskraftwerk gelöst, welches eine Gasturbine umfasst, die mit einem auch als Motor betreibbaren Generator verbunden ist und die mit einem Wasserdampfkreislauf derart thermisch über einen ersten Wärmetauscher gekoppelt ist, dass ein aus der Gasturbine austretender Gasstrom bei Betrieb des Generators als Motor Wasser in dem Wasserdampfkreislauf, welches aus einem Kaltwasserspeicher entnommen ist, thermisch konditioniert, wobei der erste Wärmetauscher ferner fluidtechnisch mit einem Dampfspeicher verschaltet ist, so dass das Wasser nach der thermischen Konditionierung als Wasserdampf in dem Dampfspeicher bevorratet werden kann, und weiter umfassend eine Dampfturbine, die mit dem Dampfspeicher derart fluidtechnisch verschaltet ist, dass sie mit Wasserdampf aus dem Dampfspeicher versorgt werden kann, wobei der Wasserdampf nach Wechselwirkung der Dampfturbine einem mit einem Kondensatspeicher fluidtechnisch zusammen wirkenden Dampfraum zur Kondensation zugeleitet wird, und wobei der Kondensatspeicher mit dem Kaltwasserspeicher fluidtechnisch derart verschaltet ist, dass kondensiertes Wasser aus dem Kondensatspeicher dem Kaltwasserspeicher zugeführt werden kann.

Erfindungsgemäß erfordert das Verfahren also eine Gasturbine, die nicht nur bei Befeuerung zur elektrischen Stromerzeugung geeignet ist, sondern die über einen Motor auch derart betrieben werden kann, dass bei Verbrauch von elektrischer Energie thermische Wärme erzeugt wird. Hierzu wird der mit der Gasturbine zusammenwirkende Generator als Motor betrieben, wobei in der Kompressorstufe der Gasturbine eine adiabatische Verdichtung der Einsaugluft zu einer Erhöhung des Temperaturniveaus dieser Einsaugluft führt. Es erfolgt also eine Umwandlung von elektrischer in thermische Energie. Die so erzeugte thermische Energie wird nun nach Austritt aus der Gasturbine in der Form nutzbar gemacht, dass Wasser in einem Wasserdampfkreislauf über einen ersten Wärmetauscher mittels des aus der Gasturbine austretenden erwärmten Gasstroms konditioniert wird. Der Austritt des erwärmten Gasstroms erfolgt hierbei bevorzugt aus der Turbinenstufe nach Expansion, da in diesem Fall die geringsten baulichen Änderungen erforderlich sind.

Die auf das Wasser übertragene thermische Energie kann durch eine geeignete Bevorratung des so thermisch konditionierten Wassers in einem Dampfspeicher für eine zeitlich nachfolgende Nutzung bereitgestellt werden. Ist es erforderlich, zu einem späteren Zeitpunkt die zwischengespeicherte thermische Energie wieder in elektrische Energie zu überführen, um sie den öffentlichen Versorgungsnetzwerken zur Verfügung zu stellen, kann das in dem Dampfspeicher bevorratete Wasser zum Betreiben einer Dampfturbine entnommen werden. Hierbei weist der aus der Dampfturbine austretende Wasserdampf typischerweise auch noch ein ausreichend hohes Temperaturniveau auf, um ihn für weitere, nachfolgende Anwendungen nutzbar zu machen. Erfindungsgemäß wird dieser aus der Dampfturbine austretende Wasserdampf folglich in einem Dampfraum kondensiert und in einem geeigneten Kondensatspeicher als Wasser gesammelt. Aus diesem Kondensatspeicher kann zu einem späteren Zeitpunkt das noch für weitere Anwendungen ausreichend warme, kondensierte Wasser entnommen werden.

Erfindungsgemäß ist es also möglich, ein Gaskraftwerk baulich und hinsichtlich der Kraftwerksprozesse so anzupassen, dass es für die Nutzung von elektrischer Leistung aus den öffentlichen Versorgungsnetzwerken geeignet ist, wenn etwa Überschussstrom zur Verfügung steht. Hierbei wird das Gaskraftwerk typischerweise in einem Ladebetrieb sowie einem Entladebetrieb genutzt. Während des Ladebetriebs wird elektrische Energie aus den öffentlichen Versorgungsnetzwerken entnommen und in thermische Energie überführt, welche dann in thermisch konditioniertem Wasser in einem Dampfspeicher zwischengespeichert werden kann. Während des Entladebetriebs hingegen wird diese thermische Energie aus dem Dampfspeicher wieder abgerufen und mit Hilfe einer Dampfturbine rückverstromt. Die nach der Rückverstromung noch ungenutzte Menge an thermischer Leistung kann auf geringerem Temperaturniveau erneut zwischengespeichert werden, um sie zu einem späteren Zeitpunkt bzw. für weitere Anwendungen zur Verfügung zu stellen. Erst nachdem diese zusätzliche thermische Leistung, die andernfalls ungenutzt bleiben würde, abgerufen wurde, wird das Wasser des Wasserdampfkreislaufs dem Kaltwasserspeicher zugeführt, aus welchem zu einem späteren Zeitpunkt während des Ladebetriebes wiederum das Wasser entnommen wird, welches über den ersten Wärmetauscher thermisch konditioniert wird.

Folglich ist es möglich, durch technisch wenig aufwendige bauliche und prozesstechnische Maßnahmen ein bereits bestehendes Gaskraftwerk soweit anzupassen, dass es auch für die Überführung von elektrischem Strom in Wärme und zur thermischen Zwischenspeicherung geeignet gemacht werden kann. Hierzu ist nur eine geringe Anpassung des mit der Gasturbine zusammenwirkenden Generators erforderlich, so dass dieser als Motor betrieben werden kann. Ferner ist die Bereitstellung eines geeigneten Wasserdampfkreislaufs erforderlich, welcher möglicherweise auf bereits bestehende Komponente (Leitungen und Speicherbehälter) der Kraftwerksanlage zurückgreifen kann.

An dieser Stelle ist auch darauf hinzuweisen, dass das thermisch konditionierte Wasser in dem Dampfspeicher sowohl als dampfförmiges Wasser wie auch in seiner flüssigen Form zwischengespeichert werden kann. Bevorzugt ist eine Zwischenspeicherung unter Druck in überhitztem Zustand.

Gemäß einer ersten bevorzugten Ausführungsform des erfindungsgemäßen Verfahrens ist vorgesehen, dass weiterhin ein Schritt des Entnehmens von Wasser aus einem Kaltwasserspeicher und Zuführen des Wassers zum ersten Wärmetauscher zur thermischen Konditionierung umfasst ist. Der Kaltwasserspeicher, der in den Wasserdampfkreislauf integriert ist, erlaubt die Zwischenspeicherung des flüssigen, thermisch noch unbehandelten Wassers, welches zur thermischen Konditionierung mittels des erwärmten Gasstromes aus der Gasturbine vorgesehen ist. Die Bevorratung des in dem Kaltwasserspeicher befindlichen Wassers erlaubt die Ausbildung eines geschlossenen Wasserdampfkreislaufs, ohne dass eine externe Versorgung mit flüssigem Wasser erforderlich wäre. Damit ist das ausführungsgemäße Verfahren nicht nur Ressourcen schonend sondern trägt auch zur Energieeffizienz des Gesamtverfahrens bei.

Gemäß einer weiteren Ausführungsform der Erfindung ist weiterhin ein Schritt des Ableitens von kondensiertem Wasser aus dem Kondensatspeicher in den Kaltwasserspeicher umfasst. Dieser Schritt des Ableitens kann zu einem Zeitpunkt erfolgen, der später liegt als derjenige Zeitpunkt, zu welchem der Kondensatspeicher mit kondensiertem Wasser aus dem Dampfraum versorgt wird. Folglich erlaubt das ausführungsgemäße Verfahren eine erhöhte Flexibilisierung, da dem Wasserdampfkreislauf zu unterschiedlichen Zeitpunkten unterschiedliche Mengen an thermischer Wärme entzogen werden können.

Gemäß einer weiteren Ausführungsform der Erfindung wird weiterhin ein Schritt des Erwärmens des in dem Dampfspeicher bevorrateten Wassers mittels einer Heizvorrichtung umfasst. Die hierbei verwendete Heizvorrichtung ist bevorzugt eine elektrisch betriebene Widerstandsheizvorrichtung. Andere Heizvorrichtungen bzw. andere Heizverfahren können jedoch ebenfalls angewandt werden. Die zusätzliche Erwärmung des in dem Dampfspeicher bevorrateten Wassers erlaubt, den thermischen Energieinhalt des Wassers vor dessen Entnahme etwa als Dampf zu erhöhen. Eine Erhöhung des Energieinhalts erhöht jedoch auch die mittels der Dampfturbine im Entladebetrieb bereitgestellte elektrische Energiemenge. Diese kann mitunter bei einem höheren Temperaturniveau auch mit verbessertem Wirkungsgrad des Betriebs der Dampfturbine bereitgestellt werden. Ausführungsgemäß ermöglicht der Schritt des Erwärmens des im Dampfspeicher bevorrateten Wasserdampfs folglich eine Verbesserung der Gesamteffizienz des Entladebetriebs.

Gemäß einer weiteren bevorzugten Ausführungsform der Erfindung ist ein Schritt des Zuführens wenigstens eines Teiles des Wasserdampfs nach Wechselwirkung mit der Dampfturbine an einen Kondensator zur Dampfkondensation umfasst, wobei insbesondere das so kondensierte Wasser dem Kaltwasserspeicher zugeführt wird. Ausführungsgemäß wird also wenigstens ein Teil der Wärme des Wasserdampfs in einem Kondensator abgeführt. Die so dem Kondensator übertragene Wärme kann möglicherweise in einem weiteren Verfahren nutzbar gemacht werden. Typischerweise wird diese Wärme jedoch verworfen. Durch Zuführung des Wasserdampfs an den Kondensator werden der Dampfraum sowie der Kondensatspeicher umgangen, so dass keine weitere Bevorratung des Wasserdampfs als Wasser im Kondensatspeicher ermöglicht wird. Vielmehr wird die Wärme im Wesentlichen in dem Kondensator entweder zur zeitlich unmittelbaren Nutzung oder zur Verwerfung bereitgestellt, wobei insbesondere das in dem Kondensator kondensierte Wasser dem Kaltwasserspeicher zur erneuten späteren thermischen Konditionierung in einem Ladebetrieb zugeführt wird. Aufgrund der Umgehung des Dampfraumes sowie des Kondensatspeichers kann folglich die in dem Kondensatspeicher bevorratete Menge an kondensiertem Wasser entsprechend der späteren Nutzung im Ladebetrieb geeignet eingestellt werden. Insbesondere ist es möglich, dass die zeitlich spätere Anwendung zur Nutzung des in dem Kondensatspeicher zwischengespeicherten kondensierten Wassers einen geringeren Wärmeinhalt bedarf, als er in der gesamten Menge des aus der Dampfturbine austretenden Wasserdampfes beinhaltet ist.

Gemäß einer besonders bevorzugten Ausführungsform des erfindungsgemäßen Verfahrens ist weiterhin ein Schritt der thermischen Konditionierung der der Gasturbine zugeführten Einsaugluft mittels eines zweiten Wärmetauschers vorgesehen, welcher mit kondensiertem Wasser aus dem Kondensatspeicher versorgt wird, wobei insbesondere das kondensierte Wasser nach Wechselwirkung mit dem zweiten Wärmetauscher dem Kaltwasserspeicher zugeführt wird. Die thermische Konditionierung der Einsaugluft kann bevorzugt über einen Zwischenkreislauf erfolgen. Der Zwischenkreislauf basiert bspw. auf Glykol als Wärmetransportmedium. Das ausführungsgemäße Verfahren ermöglicht die thermische Konditionierung der der Gasturbine zugeführten Einsaugluft, wodurch ein verbesserter Verbrennungsprozess bei Strom erzeugenden, regulärem Betrieb der Gasturbine erfolgen kann. Gleichzeitig zeigt sich, dass die physikalischen Parameter des bei dieser Verbrennung aus der Gasturbine austretenden Abgases ebenfalls für eine Nachnutzung verbessert sind. Aufgrund der in dem Kondensatspeicher zwischengespeicherten Restwärme des kondensierten Wasserdampfes kann folglich die Effizienz des zur Stromerzeugung vorgesehenen Betriebes der Gasturbine verbessert und damit die Gesamteffizienz des Gaskraftwerks erhöht werden.

Entsprechend eines weiteren Aspektes des vorliegenden Verfahrens wird der Generator mittels Überschussstrom als Motor betrieben. Der Überschussstrom wird aus den öffentlichen Versorgungsnetzwerken zu Zeitpunkten entnommen, zu welchen ein Überangebot an elektrischer Energie besteht. Die Entnahme erfolgt besonders kostengünstig bzw. sogar unter Vergütung der entnommenen Menge an elektrischer Leistung. Folglich zeichnet sich das ausführungsgemäße Verfahren durch eine besonders hohe Gesamteffizienz aus.

Gemäß eines weiteren Aspekts des erfindungsgemäßen Verfahrens ist vorgesehen, dass der Generator als Motor derart betrieben wird, dass der Gasstrom wenigstens eine Temperatur von 100°C, bevorzugt von wenigstens 150 °C aufweist. Der aus der Gasturbine austretende Gasstrom ist folglich geeignet, Wasser in dem Wasserdampfkreislauf für einen nachfolgenden Dampfprozess zu konditionieren.

Gemäß einer weiteren Ausführungsform des erfindungsgemäßen Verfahrens ist vorgesehen, dass während des Betriebs des Generators als Motor der Gasturbine kein Brennstoff zugeführt wird. Folglich wird ausschließlich elektrische Energie während des Ladebetriebs in thermische Energie überführt.

Alternativ hierzu und bevorzugt ist jedoch eine Ausführungsform bei der während des Betriebs des Generators als Motor der Gasturbinenbrennstoff in einer Menge zugeführt wird, welche geringer ist, als eine Menge, die der Gasturbine zugeführt wird bei Strom erzeugenden, regulärem Betrieb. Folglich kann der Energieinhalt des aus der Gasturbine austretenden Gasstroms zusätzlich durch die Verbrennung von der Gasturbine zugeführtem Brennstoff erhöht werden. Die Verbrennung des Brennstoffs dient hierbei jedoch nicht in erster Linie dem Antrieb der Turbinenstufe der Gasturbine, wie etwa während des Strom erzeugenden, regulären Betriebs, sondern lediglich der thermischen Konditionierung des aus der Gasturbine austretenden Gasstroms. Insbesondere erfolgt eine Brennstoffzufeuerung in erster Linie zur Erhöhung der Austrittstemperatur des Gasstroms dann, wenn Überschuss-Strom in einer Menge zur Verfügung steht, die kleiner ist als die Menge, die der Maximalantriebsleistung der Gasturbine entspricht. Durch eine geeignete Dosierung der Menge an Brennstoff, welche der Gasturbine zugeführt wird, kann das Temperaturniveau des aus der Gasturbine austretenden Gasstromes geeignet eingestellt werden. Insbesondere erlaubt die Zuführung von Brennstoff ein Temperaturniveau von wenigstens 200°C des aus der Gasturbine austretenden Gasstroms zu erreichen.

Gemäß einer ersten bevorzugten Ausführungsform des erfindungsgemäßen Gaskraftwerks weist der Dampfspeicher eine Heizvorrichtung auf, welche dazu ausgebildet ist, den im Dampfspeicher bevorrateten Wasserdampf mit weiterer thermischer Energie zu versorgen. Entsprechend einer alternativen Ausführungsform, kann die Heizvorrichtung auch vor dem Dampfspeicher angeordnet sein, so dass das dem Dampfspeicher zugeführte Wasser bereits vor Eintreten in den Dampfspeicher mit weiterer thermischer Energie versorgt wird. Bevorzugt ist jedoch die Anordnung der Heizvorrichtung in dem Dampfspeicher selbst, so dass das darin bevorratete Wasser auch noch während seiner Bevorratung mit Wärme versorgt werden kann. Vor allem bei Bevorratung über Zeitspannen von mehreren Stunden kann eine solche in dem Dampfspeicher integrierte Heizvorrichtung vorteilhaft sein, um das Temperaturniveau des Wassers für den nachfolgenden Dampfprozess ausreichend hoch zu halten.

Gemäß einer weiteren Ausführungsform der Erfindung umfasst das Gaskraftwerk weiter einen Kondensator, welcher mit der Dampfturbine so fluidtechnisch verschaltet ist, dass ihm wenigstens ein Teil des Wasserdampfes aus der Dampfturbine zugeleitet werden kann, wobei der Wasserdampf nach Kondensation in dem Kondensator dem Kaltwasserspeicher, mit dem der Kondensator fluidtechnisch verschaltet ist, zugeführt werden kann. Wie weiter oben bereits ausgeführt, erlaubt der Kondensator eine unmittelbare Nutzung der in dem Wasserdampf aus der Dampfturbine noch enthaltenen Wärme. Ferner ermöglicht der Kondensator eine Umgehung des Dampfraums sowie des Kondensatspeichers.

Entsprechend einer weiteren Ausführungsform der Erfindung ist ein zweiter Wärmetauscher in dem Gaskraftwerk vorgesehen, welcher fluidtechnisch zwischen dem Kondensatspeicher und dem Kaltwasserspeicher geschaltet ist und dazu ausgebildet ist, die der Gasturbine zugeführte Einsaugluft thermisch zu konditionieren. Der zweite Wärmetauscher erlaubt folglich, die Restwärme des in dem Kondensatspeicher zwischengespeicherten, kondensierten Wassers nutzbar zu machen, so dass die der Gasturbine zugeführte Einsaugluft erwärmt wird. Eine Erwärmung der Einsaugluft verbessert nicht nur den Verbrennungsprozess während des Strom erzeugenden, regulären Betriebs der Gasturbine, sondern auch die Gasaustrittsparameter des nach der Verbrennung aus der Gasturbine austretenden Abgases.

Gemäß eines weiteren sehr vorteilhaften Aspekts der Erfindung ist vorgesehen, dass der Dampfraum und der Kondensatspeicher zwei über wenigstens eine Leitung verbundene getrennte Behältnisse sind, wobei insbesondere der Dampfraum mit dem kondensierten Wasser aus dem Kondensatspeicher versorgt werden kann. Der aus der Dampfturbine austretende Wasserdampf wird in dem Dampfraum bis zur Kondensation abgekühlt. Als Kältequelle dient hierbei das aus dem Kondensatspeicher entnommene, kondensierte Wasser. Durch eine geeignete Einstellung der Druckverhältnisse in dem Kondensatspeicher bzw. dem Dampfraum kann der Zeitpunkt der Kondensation vorteilhaft beeinflusst werden. So ist es bspw. möglich, eine gewünschte Zieltemperatur in dem Kondensatspeicher durch eine geeignete Wahl der Druckverhältnisse darin einzustellen. Wünscht man etwa eine Temperatur von mehr als 100°C einzustellen, ist entsprechend ein Überdruck einzustellen. Zwar lässt ein Unterdruck in dem Dampfraum den gesamten Dampfprozess effizienter ablaufen, jedoch sind dann für den Wasseraustausch zwischen dem Dampfraum und dem Kondensatspeicher geeignete Pumpen und Ventile vorzusehen, die den Austausch aufwändiger gestalten.

Die räumliche Trennung zwischen Dampfraum und Kondensatspeicher erlaubt nicht nur die Einstellung geeigneter Druck- und Temperaturverhältnisse im Dampfraum, die eine Kondensation fördern, sondern erlaubt auch gleichzeitig eine Zwischenspeicherung des kondensierten Wassers in dem Kondensatspeicher. Hierbei wird das in dem Dampfraum kondensierte Wasser dem Kondensatspeicher zur Zwischenspeicherung zugeführt. Das im Kondensatspeicher zwischengespeicherte Wasser kann wiederum im Sinne eines Kreislaufs (zwischen Kondensatspeicher und Dampfraum) dem Dampfraum zugeführt werden, um den darin eingeleiteten Wasserdampf aus der Dampfturbine zu kondensieren. Entsprechend einer weniger bevorzugten Ausführungsform, jedoch einer durchaus technisch möglichen, sind der Dampfraum und der Kondensatspeicher als ein gemeinsames Behältnis ausgeführt.

Entsprechend eines weiteren Aspektes der Erfindung ist der Kondensatspeicher mit einem Fernwärmenetzwerk fluidtechnisch verbunden. Folglich kann das aus dem Kondensatspeicher entnommene kondensierte Wasser zur weiteren Nutzbarmachung einem externen Verbraucher zugeleitet werden. Ausführungsgemäß ist es auch möglich, auf einen Kondensator zu verzichten, über welchen ein Teil der thermischen Wärme abgeführt wird, die der aus der Dampfturbine austretende Wasserdampf aufweist.

Nachfolgend wird die Erfindung anhand einzelner Ausführungsformen im Detail erklärt. Hierbei stellt die Einschränkung auf einzelne Ausführungsformen keine Beschränkung des allgemein beanspruchten Gegenstandes dar.

Ferner soll darauf hingewiesen werden, dass die in den nachfolgenden Figuren dargestellten Ausführungsformen lediglich schematisch zu verstehen sind, und wiederum keine Einschränkung hinsichtlich einer konkreten Ausführung des beanspruchten Gegenstandes darstellen können.

Es zeigen:
- Figur 1: eine schematische Darstellung der Abläufe bei Betrieb einer Ausführungsform eines erfindungsgemäßen Gaskraftwerks 1 während eines Ladebetriebes;
- Figur 2: eine schematische Darstellung der in der Figur 1 gezeigten Ausführungsform des erfindungsgemäßen Gaskraftwerks 1 stattfindenden Abläufe während eines Entladebetriebs;
- Figur 3: eine schematische Darstellung der in den Figuren 1 und 2 gezeigten Ausführungsform des erfindungsgemäßen Gaskraftwerks 1 stattfindenden Abläufe während eines Stillstand-Betriebs;
- Figur 4: eine flussdiagrammatische Darstellung einer Ausführungsform des erfindungsgemäßen Verfahrens zum Betrieb eines Gaskraftwerks.

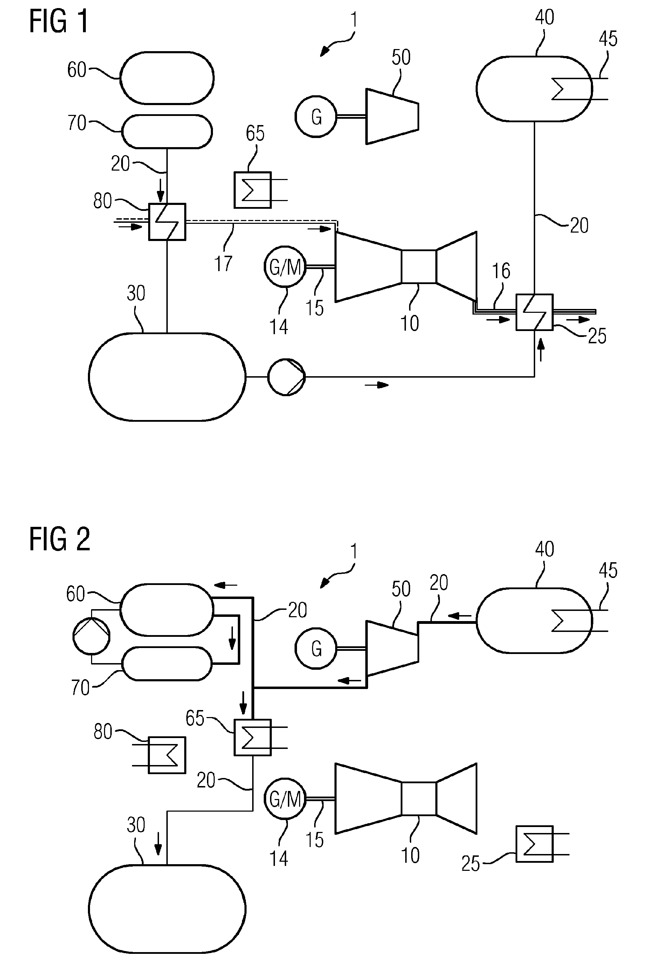

Figur 1 zeigt eine schematische Darstellung einzelner Abläufe in einer Ausführungsform eines erfindungsgemäßen Gaskraftwerks 1 während eines Ladebetriebes. Demnach wird eine Gasturbine 10 eines Gaskraftwerks 1, die über eine Welle 15 mit einem auch als Motor betreibbaren Generator 14 verbunden ist, über den Generator 14 als Motor angetrieben. Hierbei wird die Einsaugluft 17 zunächst in einem Verdichterabschnitt der Gasturbine 10 im Wesentlichen adiabatisch komprimiert, wobei das Temperaturniveau der so komprimierten Einsaugluft 17 erhöht wird. Ausführungsgemäß ist es auch möglich, dass zur weiteren Erhöhung des Temperaturniveaus in der Brennkammer der Gasturbine 10 Brennstoff zugeführt wird, welcher während Durchtritt der komprimierten Luft durch die Brennkammer verbrannt wird. Die dabei entstehende Verbrennungswärme wird auf das Abgas übertragen und erhöht dessen Temperatur und Wärmeinhalt. Bei Austritt dieser so behandelten Luft aus der Gasturbine steht folglich ein Gasstrom 16 bereit, dessen Temperaturniveau über dem Temperaturniveau der Einsaugluft 17 liegt.

Der Gastrom 16 wird anschließend einem ersten Wärmetauscher 25 zugeleitet, mittels welchem die Wärme des Gasstroms 16 wenigstens teilweise auf Wasser übertragen wird, welches sich in einem Wasserdampfkreislauf 20 befindet. Das Wasser wird hierbei aus einem Kaltwasserspeicher 30 entnommen, wobei der Wasserfluss in dem Wasserdampfkreislauf 20 durch einen nicht weiter mit Bezugszeichen versehenen Strömungsgenerator (Pumpe) eingestellt werden kann.

Nach thermischer Konditionierung des in dem Wasserdampfkreislauf 20 befindlichen Wassers wird dieses einem Dampfspeicher 40 zugeführt. Um den Wärmeinhalt des in dem Dampfspeicher 40 bevorrateten Wassers weiterhin geeignet einzustellen, ist zudem eine Heizvorrichtung 45 in dem Dampfspeicher 40 vorgesehen. Mittels dieser Heizvorrichtung 45 kann dem in dem Dampfspeicher 40 bevorrateten Wasser ausreichend bzw. vermehrt Wärme zugeführt werden, um eine vorteilhafte Rückverstromung über einen Dampfprozess zu ermöglichen.

Um die der Gasturbine 10 zugeführte Einsaugluft 17 geeignet thermisch zu behandeln, ist weiterhin vorgesehen, kondensiertes Wasser aus dem Kondensatspeicher 70 zu entnehmen, und dieses über den zweiten Wärmetauscher 80 dem Kaltwasserspeicher 30 zuzuführen. Hierbei wird die in dem kondensierten Wasser befindliche Restwärme wenigstens zum Teil auf die Einsaugluft 17 übertragen, bevor sie der Gasturbine 10 zugeleitet wird. Damit erfolgt eine Erhöhung des Temperaturniveaus der Einsaugluft 17, wodurch dem Dampfspeicher 40 eine vergrößerte Wärmemenge zugeführt werden kann.

Figur 2 zeigt eine schematische Darstellung einzelner Abläufe der in Figur 1 gezeigten Ausführungsform des erfindungsgemäßen Gaskraftwerks 1 während eines Entladebetriebs. Hierbei wird nun das in dem Dampfspeicher 40 bevorratete Wasser bevorzugt in Form von Wasserdampf der Dampfturbine 50 zugeführt, die dem Wasser thermische Wärme zur elektrischen Stromerzeugung entzieht. Der aus der Dampfturbine 50 austretende Wasserdampf wird über den Wasserdampfkreislauf 20 zu vorbestimmten Teilen einem Dampfraum 60 und/oder einem Kondensator 65 zugeführt. Durch das Vorsehen geeigneter Stellmittel (Ventile) können die einzelnen Teile geeignet zueinander eingestellt werden.

Der dem Dampfraum 60 zugeführte Wasserdampf kondensiert in dem Dampfraum 60 und wird als flüssiges Wasser in den Kondensatspeicher 70 übergeleitet. Um den Kondensationsprozess in dem Dampfraum 60 zu unterhalten, wird flüssiges Wasser aus dem Kondensatspeicher 70 in den Dampfraum 60 etwa mittels einer geeigneten Pumpvorrichtung (vorliegend nicht gezeigt) überführt. Hierbei ist es erforderlich, dass der Kondensatspeicher 70 bereits vor dem Entladebetrieb mit einer ausreichenden Menge an kondensiertem Wasser befüllt ist, so dass eine Kondensation in dem Dampfraum 60 ermöglicht werden kann.

Ein weiterer Teil des aus der Dampfturbine 50 austretenden Wasserdampfs kann zudem dem Kondensator 65 zugeführt werden, welcher eine Kondensation des Wasserdampfs ermöglicht. Das in dem Kondensator 65 kondensierte Wasser wird nachfolgend über den Wasserdampfkreislauf 20 dem Kaltwasserspeicher 30 zugeführt. Das in dem Kaltwasserspeicher 30 bevorratete Wasser wird später während des Ladebetriebs des Gaskraftwerks 1 in einem erneuten Zyklus thermisch in dem ersten Wärmetauscher 40 konditioniert. Durch die Zuleitung eines Teils des aus der Gasturbine 50 austretenden Wasserdampfs in den Kondensator 65 wird ein Teil der in dem Wasserdampf befindlichen thermischen Wärme an dem Dampfraum 60 sowie an dem Kondensatspeicher 70 vorbeigeführt.

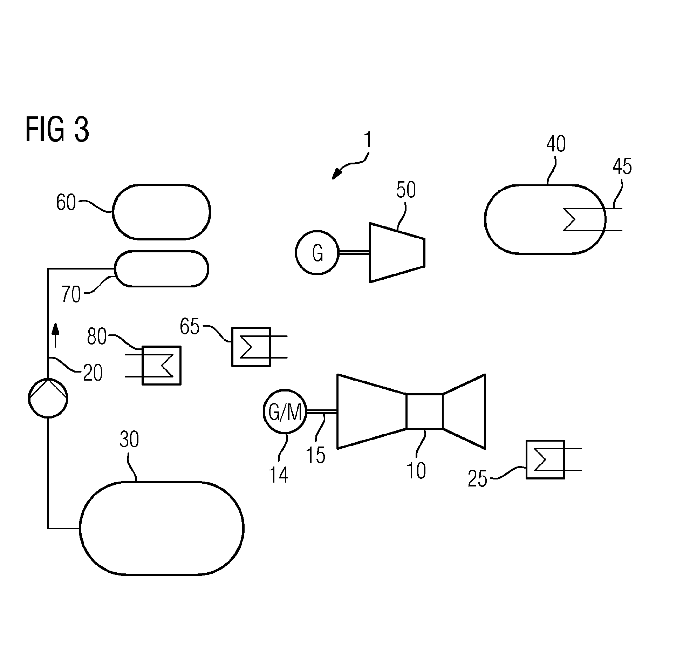

Figur 3 zeigt Verfahrensabläufe des in den Figuren 1 und 2 gezeigten Gaskraftwerks 1 während eines Stillstand-Betriebs. Der Stillstand-Betrieb ist hierbei dadurch gekennzeichnet, dass sich die Gasturbine 10 weder in einem regulären Betrieb zur Stromerzeugung, noch in einem Betrieb des Generators 14 als Motor zur Bereitstellung von thermischer Wärme an den ersten Wärmetauscher 25 befindet. Während dieses Betriebszustands wird in dem Kaltwasserspeicher 30 befindliches Wasser in den Kondensatspeicher 70 überführt, damit dieser insbesondere während des Entladebetriebs ausreichend Wasser zur Verfügung hat, um die Kondensation des aus der Dampfturbine 50 austretenden Wasserdampfes gewährleisten zu können.

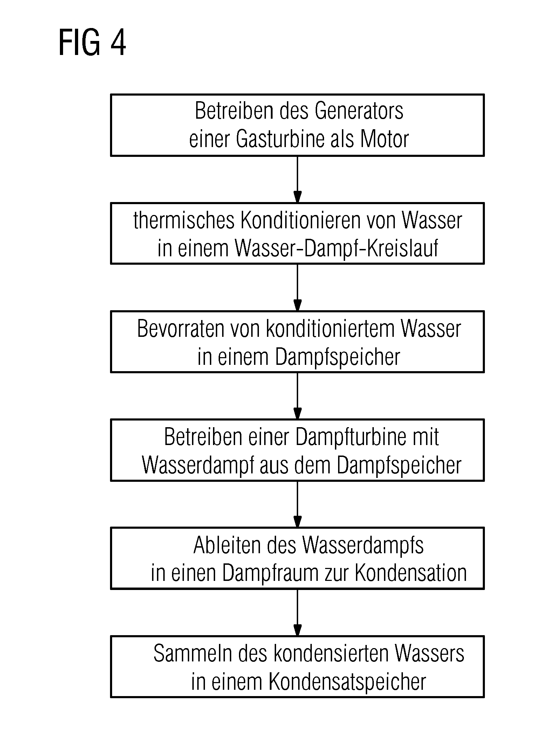

Figur 4 zeigt eine flussdiagrammatische Darstellung einer Ausführungsform des erfindungsgemäßen Verfahrens zum Betrieb eines Gaskraftwerks 1. Das Gaskraftwerk umfasst hierbei eine Gasturbine 10, die mit einem auch als Motor betreibbaren Generator 14 verbunden ist, und die mit einem Wasserdampfkreislauf 20 thermisch über einen ersten Wärmetauscher 25 gekoppelt ist, wobei die folgenden Schritte von dem ausführungsgemäßen Verfahren umfasst sind: zunächst wird der mit der Gasturbine 10 verbundene Generator 14 als Motor betrieben. Der aus der Gasturbine 10 austretende thermisch konditionierte Gasstrom 16 erlaubt eine thermische Konditionierung von Wasser in einem Wasserdampfkreislauf 20. Nach der erfolgten thermischen Konditionierung wird das so konditionierte Wasser in einem Dampfspeicher 40 bevorratet und zur zeitlich nachfolgenden Nutzung bereitgehalten. Während eines zeitlich nachfolgenden Entladebetriebs wird die von dem Gaskraftwerk 1 umfasste Dampfturbine 50 mit dem Wasser aus dem Dampfspeicher 40 betrieben. Der aus der Dampfturbine 50 austretende Wasserdampf wird zur Kondensation abgeleitet. Die Ableitung erfolgt in einen Dampfraum 60. Das in dem Dampfraum 60 kondensierte Wasser wird erneut zur weiteren zeitlich nachfolgenden Nutzung in einem Kondensatspeicher 70 gesammelt.

Weitere Ausführungsformen ergeben sich aus den Unteransprüchen.

## Patentansprüche

1. Verfahren zum Betrieb eines Gaskraftwerks (1), umfassend eine Gasturbine (10), die mit einem auch als Motor betreibbaren Generator (14) verbunden ist und die mit einem Wasserdampfkreislauf (20) thermisch über einen ersten Wärmetauscher (25) gekoppelt ist, welches Verfahren folgende Schritte umfasst:
- Betreiben des Generators (14) als Motor derart, dass aus der Gasturbine (10) ein erwärmter Gasstrom (16) austritt;
- thermisches Konditionieren von Wasser in dem Wasserdampfkreislauf (20) über den ersten Wärmetauscher (25) mittels des erwärmten Gasstroms (16);
- Bevorraten des so thermisch konditionierten Wassers in einem Dampfspeicher (40);
- Betreiben einer Dampfturbine (50) mit Wasserdampf, welcher aus dem Dampfspeicher (40) entnommen wird;
- Ableiten des Wasserdampfs nach Wechselwirkung mit der Dampfturbine (50) in einen Dampfraum (60) zur Kondensation;
- Sammeln des kondensierten Wassers in einem Kondensatspeicher (70);

2. Verfahren gemäß Anspruch 1,
**dadurch gekennzeichnet, dass** weiterhin ein Schritt des Entnehmens von Wasser aus einem Kaltwasserspeicher (30) und Zuführen des Wassers zum ersten Wärmetauscher (25) zur thermischen Konditionierung umfasst ist.

3. Verfahren gemäß einem der vorhergehenden Ansprüche,
**dadurch gekennzeichnet, dass** weiterhin ein Schritt des Ableitens von kondensiertem Wasser aus dem Kondensatspeicher (70) in den Kaltwasserspeicher (30) umfasst ist.

4. Verfahren gemäß einem der vorhergehenden Ansprüche,
**dadurch gekennzeichnet, dass** weiterhin ein Schritt des Erwärmens des in dem Dampfspeicher (40) bevorrateten Wassers mittels einer Heizvorrichtung (45) umfasst ist.

5. Verfahren gemäß einem der vorhergehenden Ansprüche,
**dadurch gekennzeichnet, dass** weiterhin ein Schritt des Zuführens wenigstens eines Teiles des Wasserdampfs nach Wechselwirkung mit der Dampfturbine (50) an einen Kondensator (65) zur Dampfkondensation umfasst ist, wobei insbesondere das so kondensierte Wasser dem Kaltwasserspeicher (30) zugeführt wird.

6. Verfahren gemäß einem der vorhergehenden Ansprüche,
**dadurch gekennzeichnet, dass** weiterhin ein Schritt der thermischen Konditionierung der der Gasturbine (10) zugeführten Einsaugluft mittels eines zweiten Wärmetauschers (80) vorgesehen ist, welcher mit kondensiertem Wasser aus dem Kondensatspeicher (70) versorgt wird, wobei insbesondere das kondensierte Wasser nach Wechselwirkung mit dem zweiten Wärmetauscher (80) dem Kaltwasserspeicher (30) zugeführt wird.

7. Verfahren gemäß einem der vorhergehenden Ansprüche,
**dadurch gekennzeichnet, dass** der Generator (14) mittels Überschussstrom als Motor betrieben wird.

8. Verfahren gemäß einem der vorhergehenden Ansprüche,
**dadurch gekennzeichnet, dass** der Generator (14) als Motor derart betrieben wird, dass der Gasstrom (16) wenigstens eine Temperatur von 100 °C, bevorzugt von wenigstens 150 °C aufweist.

9. Verfahren gemäß einem der vorhergehenden Ansprüche,
**dadurch gekennzeichnet, dass** während des Betriebs des Generators (14) als Motor der Gasturbine (10) kein Brennstoff zugeführt wird.

10. Verfahren gemäß einem der vorhergehenden Ansprüche 1 bis 8,
**dadurch gekennzeichnet, dass** während des Betriebs des Generators (14) als Motor der Gasturbine (10) Brennstoff in einer Menge zugeführt wird, welche geringer ist, als eine Menge, die der Gasturbine (10) zugeführt wird bei Strom erzeugendem, regulärem Betrieb.

11. Gaskraftwerk (1), umfassend eine Gasturbine (10), die mit einem auch als Motor betreibbaren Generator (14) verbunden ist und die mit einem Wasserdampfkreislauf (20) derart thermisch über einen ersten Wärmetauscher (25) gekoppelt ist, dass ein aus der Gasturbine (10) austretender Gasstrom (16) bei Betrieb des Generators (14) als Motor Wasser in dem Wasserdampfkreislauf (20), welches aus einem Kaltwasserspeicher (30) entnommen ist, thermisch konditioniert, wobei der erste Wärmetauscher (25) ferner fluidtechnisch mit einem Dampfspeicher (40) verschaltet ist, so dass das Wasser nach der thermischen Konditionierung als Wasserdampf in dem Dampfspeicher (40) bevorratet werden kann,
und weiter umfassend eine Dampfturbine (50), die mit dem Dampfspeicher (40) derart fluidtechnisch verschaltet ist, dass sie mit Wasserdampf aus dem Dampfspeicher (40) versorgt werden kann, wobei der Wasserdampf nach Wechselwirkung mit der Dampfturbine (50) einem mit einem Kondensatspeicher (70) fluidtechnisch zusammen wirkenden Dampfraum (60) zur Kondensation zugeleitet wird, und wobei der Kondensatspeicher (70) mit dem Kaltwasserspeicher (30) fluidtechnisch derart verschaltet ist, dass kondensiertes Wasser aus dem Kondensatspeicher (70) dem Kaltwasserspeicher (30) zugeführt werden kann.

12. Gaskraftwerk gemäß Anspruch 11,
**dadurch gekennzeichnet, dass** der Dampfspeicher (40) eine Heizvorrichtung (45) aufweist, welche dazu ausgebildet ist, den im Dampfspeicher (40) bevorrateten Wasserdampf mit weiterer thermischer Energie zu versorgen.

13. Gaskraftwerk gemäß Anspruch 11 oder 12,
**dadurch gekennzeichnet, dass** weiter ein zweiter Wärmetauscher (80) vorgesehen ist, welcher fluidtechnisch zwischen den Kondensatspeicher (70) und den Kaltwasserspeicher (30) geschaltet ist und dazu ausgebildet ist, die der Gasturbine (10) zugeführte Einsaugluft thermisch zu konditionieren.

14. Gaskraftwerk gemäß Anspruch 11 bis 13,
**dadurch gekennzeichnet, dass** der Dampfraum (60) und der Kondensatspeicher (70) zwei über wenigstens eine Leitung verbundene getrennte Behältnisse sind, wobei insbesondere der Dampfraum (60) mit kondensiertem Wasser aus dem Kondensatspeicher (70) versorgt werden kann.

15. Gaskraftwerk gemäß Anspruch 11 bis 14,
**dadurch gekennzeichnet, dass** der Kondensatspeicher (70) mit einem Fernwärmenetzwerk fluidtechnisch verbunden ist.
